# EUROPEAN PATENT APPLICATION

(11) **EP 4 799 864 A1**
(43) Date of publication of application: **02.09.2026**
(21) Application number: 24936632.9
(22) Date of filing: 13.09.2024
(51) Int. Cl.: B60Q 1/04

(54) **PROJECTION MODULE, VEHICLE LAMP DEVICE, AND VEHICLE**

(30) Priority: 24.04.2024 CN 202420869241 U
(71) Applicant: Yinwang Intelligent Technologies Co., Ltd., Shenzhen, Guangdong 518110 (CN)
(72) Inventor: ZHAO, Zhuang, Shenzhen, Guangdong 518129 (CN); LAI, Lan, Shenzhen, Guangdong 518129 (CN); DUAN, Junke, Shenzhen, Guangdong 518129 (CN)
(74) Representative: Maiwald GmbH
(86) International application number: PCT/CN2024/118897
(87) International publication number: WO 2025/222740

(57) **Abstract**

A projection module (40), a vehicle lamp apparatus (110), and a vehicle (100) are disclosed. The vehicle lamp apparatus (110) includes a first vehicle lamp (10) and a second vehicle lamp (20), and the first vehicle lamp (10) and the second vehicle lamp (20) are disposed on a same vehicle (100). The first vehicle lamp (10) includes an illumination module (30) and a projection module (40), and the second vehicle lamp (20) includes an illumination module (30) and a companion module (50). The illumination module (30) in the first vehicle lamp (10) and the illumination module (30) in the second vehicle lamp (20) are symmetrically disposed, and the illumination module (30) is configured to emit a first illumination light beam. The projection module (40) and the companion module (50) are symmetrically disposed. The projection module (40) is configured to emit an imaging light beam that forms an image, and the companion module (50) is configured to emit a second illumination light beam. This reduces a quantity of projection modules and a quantity of modules in the vehicle lamp apparatus (110), thereby decreasing costs of the vehicle lamp apparatus (110).

## Description

This application claims priority to Chinese Patent Application No. 202420869241.9, filed with the China National Intellectual Property Administration on April 24, 2024 and entitled "PROJECTION MODULE, VEHICLE LAMP APPARATUS, AND VEHICLE", which is incorporated herein by reference in its entirety.

### TECHNICAL FIELD

Embodiments of this application relate to the field of vehicle technologies, and in particular, to a projection module, a vehicle lamp apparatus, and a vehicle.

### BACKGROUND

With continuous innovation and diverse advancements of vehicle technologies, a vehicle lamp system on a vehicle develops beyond mere illumination to incorporate personalized designs, safe interaction, and the like accordingly, to improve driving safety, and provide an entertainment projection function to improve user experience. In a related technology, a vehicle lamp system includes a left headlamp and a right headlamp. The left headlamp is mounted on the left front of a vehicle, and the right headlamp is mounted on the right front of the vehicle. The left headlamp and the right headlamp each include a low beam module, a high beam module, and a projection module. The low beam module is configured to implement a low beam function, and the high beam module is configured to implement a high beam function. The two projection modules jointly emit a projection light beam and implement an interaction/entertainment projection function. However, due to high costs of the projection module and their quantity being two, costs of the vehicle lamp system become significantly elevated.

### SUMMARY

Embodiments of this application provide a projection module, a vehicle lamp apparatus, and a vehicle, to reduce a quantity of projection modules and reduce costs of the vehicle lamp apparatus.

A first aspect of this application provides a vehicle lamp apparatus, including a first vehicle lamp and a second vehicle lamp, where the first vehicle lamp and the second vehicle lamp are disposed on a same vehicle. The first vehicle lamp includes an illumination module and a projection module, and the second vehicle lamp includes an illumination module and a companion module. The illumination module in the first vehicle lamp and the illumination module in the second vehicle lamp are symmetrically disposed, and the illumination module is configured to emit a first illumination light beam. The projection module and the companion module are symmetrically disposed. The projection module is configured to emit an imaging light beam that forms an image, and the companion module is configured to emit a second illumination light beam.

According to the vehicle lamp apparatus provided in this embodiment of this application, content such as an icon, a picture, and a video is projected through a high-resolution projection module, to implement an interaction requirement and a projection requirement, and improve driving safety. In addition, illumination may be implemented through at least one of the illumination module, the projection module, and the companion module, to meet an illumination requirement. In addition, when the illumination module implements an illumination requirement, enhanced illumination may be performed through the projection module and/or the companion module, so that driving safety can be further improved.

Because there is one projection module, costs of the vehicle lamp apparatus can be reduced while meeting projection and interaction requirements. In addition, the companion module and the projection module cooperate with each other, to meet function requirements of the vehicle lamp apparatus in a plurality of scenarios.

In a possible implementation, the illumination module includes a low beam mode, and when the illumination module is in the low beam mode, the first illumination light beam is used to implement low beam illumination.

In this way, an illumination requirement can be provided in an environment with a poor field of view (for example, a night environment or a dim environment), to improve driving safety.

In a possible implementation, the illumination module further includes a first high beam mode, and when the illumination module is in the first high beam mode, the first illumination light beam is used to implement high beam illumination.

In this way, long-distance illumination can be provided in an environment with a poor field of view (for example, a night environment or a dim environment), to increase a driving field of view.

In a possible implementation, when the illumination module is in the first high beam mode, the first illumination light beam is used to implement adaptive driving beam illumination.

In this way, based on a position of and a distance to an oncoming vehicle, an illumination range of the illumination module may be automatically adjusted, and a light illumination instruction in an area of the oncoming vehicle may be disabled or dimmed, to reduce glare from the oncoming vehicle and meet a field of view requirement of a driver to a maximum extent.

In a possible implementation, the first vehicle lamp and the second vehicle lamp each further include a high beam module, the high beam module in the first vehicle lamp and the high beam module in the second vehicle lamp are symmetrically disposed, and the high beam module is configured to implement high beam illumination.

In this way, long-distance illumination can be provided in an environment with a poor field of view (for example, a night environment or a dim environment), to increase a driving field of view.

In a possible implementation, the high beam module is configured to implement adaptive driving beam illumination.

In this way, based on a position of and a distance to an oncoming vehicle, an illumination range of the high beam module may be automatically adjusted, and a light illumination instruction in an area of the oncoming vehicle may be disabled or dimmed, to reduce glare from the oncoming vehicle and meet a field of view requirement of a driver to a maximum extent.

In a possible implementation, the companion module further includes a second high beam mode, and when the companion module is in the second high beam mode, the second illumination light beam is used to implement high beam illumination.

In this way, long-distance illumination can be provided in an environment with a poor field of view (for example, a night environment or a dim environment), to increase a driving field of view.

In a possible implementation, when the companion module is in the second high beam mode, the second illumination light beam is used to implement adaptive driving beam illumination.

In this way, based on a position of and a distance to an oncoming vehicle, an illumination range of the companion module may be automatically adjusted, and a light illumination instruction in an area of the oncoming vehicle may be disabled or dimmed, to reduce glare from the oncoming vehicle and meet a field of view requirement of a driver to a maximum extent.

In a possible implementation, the companion module includes a low beam auxiliary mode, and when the companion module is in the low beam auxiliary mode, the second illumination light beam is used to implement low beam auxiliary illumination.

In this way, when the illumination module implements low beam illumination, the companion module emits light, so that low beam enhanced illumination can be implemented, and driving safety can be further improved.

In a possible implementation, the companion module includes a high beam auxiliary mode, and when the companion module is in the high beam auxiliary mode, the second illumination light beam is used to implement high beam auxiliary illumination.

In this way, when the high beam module or the illumination module implements high beam illumination, the companion module emits light, so that high beam enhanced illumination can be implemented, which helps further improve driving safety.

In a possible implementation, the companion module includes a flicker mode, and when the companion module is in the flicker mode, the companion module emits the second illumination light beam at intervals a plurality of times in one period.

In this way, the companion module emits light at intervals in one period, so that a warning can be given to a target to improve safety of a driver and a person outside the vehicle, improving aesthetics of the vehicle. In addition, a quantity of modules in the vehicle lamp apparatus does not need to be increased, which helps reduce costs of the vehicle lamp apparatus.

In a possible implementation, the companion module includes a blind spot compensation mode, and when the companion module is in the blind spot compensation mode, the second illumination light beam is used to implement blind spot illumination.

In this way, driving safety can be further improved without increasing a quantity of modules in the vehicle lamp apparatus, and costs of the vehicle lamp apparatus can be reduced.

In a possible implementation, the vehicle lamp apparatus further includes a controller, and the controller is electrically connected to the projection module and the companion module separately. The controller is configured to control the projection module to emit the imaging light beam, and/or the controller is configured to control the companion module to emit the second illumination light beam.

In a possible implementation, the vehicle lamp apparatus further includes a controller, and the controller is electrically connected to the projection module and the companion module separately. The controller is configured to control, based on perceptual Information output by a perception module, the projection module to emit the imaging light beam, and/or the controller is configured to control, based on the perceptual Information output by the perception module, the companion module to emit the second illumination light beam.

In this way, the controller may control the projection module and/or the companion module to emit light based on the perceptual Information, so that advantages of the projection module and the companion module are complementary, and a function requirement of an intelligent vehicle lamp in a plurality of scenarios is met based on a minimum quantity of modules.

In a possible implementation, at least one of the first vehicle lamp and the second vehicle lamp further includes the perception module, and the perception module is electrically connected to the controller.

In a possible implementation, the vehicle lamp apparatus includes two controllers. One of the controllers is configured to control, based on the perceptual Information output by the perception module, the projection module to emit the imaging light beam, and the other controller is configured to control, based on the perceptual Information output by the perception module, the companion module to emit the second illumination light beam.

In this way, while controlling the projection module and the companion module, it is possible to reduce performance requirements of the controller, thereby lowering costs of the controller, which in turn reduces costs of the vehicle lamp apparatus.

In a possible implementation, the projection module includes a projection mode and an illumination mode. When the projection module is in the projection mode, the projection module emits the imaging light beam. When the projection module is in the illumination mode, the projection module emits a third illumination light beam, and the third illumination light beam is used to implement auxiliary illumination.

In this way, in addition to implementing a projection function, the projection module may further perform auxiliary illumination such as low beam auxiliary illumination, high beam auxiliary illumination, or blind spot illumination in an illumination scenario, so that an illumination range or brightness can be further improved, and an illumination effect of intelligent illumination can be further improved.

In a possible implementation, the vehicle lamp apparatus includes a first mode, a second mode, a third mode, a fourth mode, a fifth mode, a sixth mode, and a seventh mode. When the vehicle lamp apparatus is in the first mode, the projection module emits the imaging light beam. When the vehicle lamp apparatus is in the second mode, the illumination module emits the first illumination light beam. When the vehicle lamp apparatus is in the third mode, the companion module emits the second illumination light beam. When the vehicle lamp apparatus is in the fourth mode, the projection module emits the imaging light beam, and the illumination module emits the first illumination light beam. When the vehicle lamp apparatus is in the fifth mode, the illumination module emits the first illumination light beam, and the companion module emits the second illumination light beam. When the vehicle lamp apparatus is in the sixth mode, the projection module emits the imaging light beam, the illumination module emits the first illumination light beam, and the companion module emits the second illumination light beam. When the vehicle lamp apparatus is in the seventh mode, the projection module emits the imaging light beam, and the companion module emits the second illumination light beam.

In this way, light emitted by the projection module, light emitted by the illumination module, and light emitted by the companion module cooperate with each other, to implement three functional scenarios of intelligent illumination, intelligent interaction, and intelligent projection based on a minimum quantity of modules. This can improve driving safety, and further can improve user experience.

A second aspect of this application provides a projection module. The projection module is disposed in a first vehicle lamp, the first vehicle lamp further includes an illumination module, the illumination module in the first vehicle lamp and an illumination module in a second vehicle lamp are symmetrically disposed, and the illumination module is configured to emit a first illumination light beam. The first vehicle lamp and the second vehicle lamp are disposed on a same vehicle. The second vehicle lamp includes a companion module. The projection module and the companion module are symmetrically disposed. The projection module is configured to emit an imaging light beam that forms an image, and the companion module is configured to emit a second illumination light beam.

In a possible implementation, the projection module includes a projection mode and an illumination mode. When the projection module is in the projection mode, the projection module emits the imaging light beam. When the projection module is in the illumination mode, the projection module emits a third illumination light beam, and the third illumination light beam is used to implement auxiliary illumination.

In this way, in addition to implementing a projection function, the projection module may further perform auxiliary illumination such as low beam auxiliary illumination, high beam auxiliary illumination, or blind spot illumination in an illumination scenario, so that an illumination range or brightness can be further improved, and an illumination effect of intelligent illumination can be further improved.

In a possible implementation, the projection module includes a control unit, the control unit is configured to be electrically connected to a controller, and the control unit and the controller are configured to control the projection module to emit the imaging light beam.

In this way, the control unit is disposed in the projection module, so that the projection module has a control function. The projection module has some control functions that cooperate with a control function deployed on another controller to control the projection module.

In a possible implementation, the projection module includes a control unit, and the control unit is configured to control, based on perceptual Information, the projection module to emit the imaging light beam.

In this way, the projection module has a control function, and can control, based on the perceptual Information, the projection module to emit the imaging light beam.

In a possible implementation, the illumination module includes a low beam mode, and when the illumination module is in the low beam mode, the first illumination light beam is used to implement low beam illumination.

In a possible implementation, the illumination module further includes a first high beam mode, and when the illumination module is in the first high beam mode, the first illumination light beam is used to implement high beam illumination.

In a possible implementation, the companion module further includes a second high beam mode, and when the companion module is in the second high beam mode, the second illumination light beam is used to implement high beam illumination.

In a possible implementation, the companion module includes a low beam auxiliary mode, and when the companion module is in the low beam auxiliary mode, the second illumination light beam is used to implement low beam auxiliary illumination.

In a possible implementation, the companion module includes a high beam auxiliary mode, and when the companion module is in the high beam auxiliary mode, the second illumination light beam is used to implement high beam auxiliary illumination.

A third aspect of this application provides a vehicle, including a vehicle body and the vehicle lamp apparatus according to any one of the first aspect, where the vehicle lamp apparatus is mounted on the vehicle body.

The vehicle provided in this embodiment of this application can improve safety of the vehicle and user experience through an intelligent vehicle lamp apparatus.

In a possible implementation, the vehicle lamp apparatus includes a first vehicle lamp and a second vehicle lamp, the first vehicle lamp is mounted on the left front of the vehicle body, the second vehicle lamp is mounted on the right front of the vehicle body, and the first vehicle lamp and the second vehicle lamp are symmetrically disposed.

### BRIEF DESCRIPTION OF DRAWINGS

FIG. 1 is a diagram of an architecture of a vehicle lamp system in a related technology;
FIG. 2 is a diagram of a structure of a vehicle according to an embodiment of this application;
FIG. 3 is a diagram of an architecture of a first vehicle lamp apparatus according to an embodiment of this application;
FIG. 4 is a diagram of light emitting of each module in the vehicle lamp apparatus in FIG. 3;
FIG. 5 is a diagram of a control architecture of a vehicle lamp apparatus according to an embodiment of this application;
FIG. 6 is a diagram of another control architecture of a vehicle lamp apparatus according to an embodiment of this application;
FIG. 7 is a diagram of an architecture of a second vehicle lamp apparatus according to an embodiment of this application;
FIG. 8 is a diagram of an architecture of a third vehicle lamp apparatus according to an embodiment of this application;
FIG. 9 is a diagram of an architecture of another projection module according to an embodiment of this application; and
FIG. 10 is a diagram of an architecture of a fourth vehicle lamp apparatus according to an embodiment of this application.

### Descriptions of reference numerals:

100: vehicle;
110: vehicle lamp apparatus;
120: vehicle body;
10: first vehicle lamp; 11: first housing;
20: second vehicle lamp; 21: second housing;
30: illumination module;
40: projection module; 41: control unit;
50: companion module;
60: perception module;
70: controller; and
80: high beam module.

### DESCRIPTION OF EMBODIMENTS

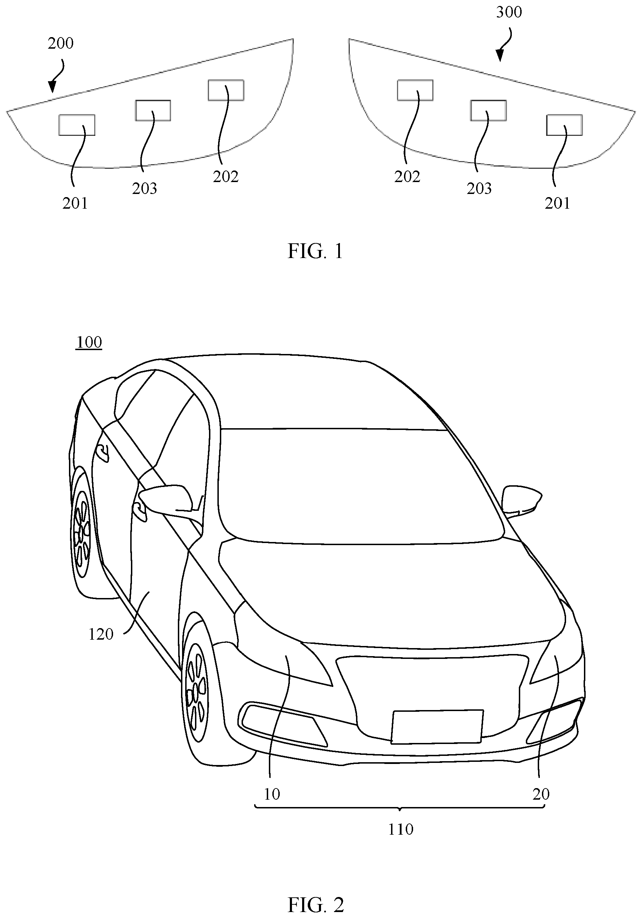

FIG. 1 is a diagram of an architecture of a vehicle lamp system in a related technology. In the related technology, as shown in FIG. 1, the vehicle lamp system includes a left headlamp 200 and a right headlamp 300. The left headlamp 200 is mounted on the left front of a vehicle, and the right headlamp 300 is mounted on the right front of the vehicle. The left headlamp 200 and the right headlamp 300 each include a low beam module 202, a high beam module 203, and a projection module 201. The two projection modules 201 are symmetrically disposed, the two high beam modules 203 are symmetrically disposed, and the two low beam modules 202 are symmetrically disposed. The two low beam modules 202 are configured to implement a low beam function, thereby implementing low beam illumination. Both the two projection modules 201 are high-resolution DLP modules. The DLP module has features of high resolution and high definition. The two projection modules 201 jointly emit projection light beams that superimpose with each other, to implement an interaction or entertainment projection function.

However, because costs of the projection module 201 are high, and there are two projection modules 201, costs of a vehicle lamp apparatus are high. In addition, there are also a large quantity of modules in the vehicle lamp apparatus, which also causes high costs of the vehicle lamp apparatus. Therefore, how to reduce costs of the vehicle lamp apparatus while meeting multi-scenario requirements becomes an urgent problem to be resolved.

In view of this, embodiments of this application provide a projection module 40, a vehicle lamp apparatus 110, and a vehicle 100, to meet a multi-scenario requirement through a small quantity of modules. In addition, there is one projection module 40, so that costs of the vehicle lamp apparatus 110 can be reduced.

The vehicle 100 may be a car, a truck, a motorcycle, a bus, a recreational vehicle, a playground vehicle, a construction device, a tram, or the like. In embodiments of this application, an example in which the vehicle 100 is a car is used for description.

FIG. 2 is a diagram of a structure of a vehicle according to an embodiment of this application.

As shown in FIG. 2, the vehicle 100 includes a vehicle body 120 and a vehicle lamp apparatus 110. The vehicle lamp apparatus 110 is mounted on the vehicle body 120. The vehicle lamp apparatus 110 may implement three functional scenarios of intelligent illumination, intelligent interaction, and intelligent projection. This can improve driving safety, and further can improve user experience effect.

The intelligent illumination may include an intelligent low beam and an intelligent high beam. The intelligent low beam may include low beam enhanced illumination, and the intelligent high beam may include scenarios such as high beam enhanced illumination, and adaptive driving beam (adaptive driving beam, ADB).

The intelligent interaction may include driving guidance, driving prompt, and interaction. The driving guidance may be a scenario such as width indication guidance (a light blanket). The driving prompt may include a scenario like a safe ranging function, a light navigation function, a driving status warning, a traffic sign reminder, and a road risk reminder. The driving interaction may include a scenario like driving track interaction and zebra crossing information.

The intelligent projection may include a ground projection and a wall projection, and may implement scenarios such as mobile phone multimedia, in-vehicle infotainment multimedia, PC multimedia, interactive games, and greeting.

For example, as shown in FIG. 2, the vehicle lamp apparatus 110 may be a front lamp module, and the front lamp module is mounted in front of the vehicle body 120. In some implementations, the vehicle lamp apparatus 110 may alternatively be a rear lamp module, and the rear lamp module is mounted at the rear of the vehicle body 120. In some other implementations, the vehicle lamp apparatus 110 may alternatively be a side lamp module, and the side lamp module is mounted on a left side or a right side of the vehicle body 120.

As shown in FIG. 2, the vehicle lamp apparatus 110 includes a first vehicle lamp 10 and a second vehicle lamp 20, and the first vehicle lamp 10 and the second vehicle lamp 20 are disposed on the vehicle body 120 of the same vehicle 100. The first vehicle lamp 10 is mounted on the left front of the vehicle body 120, the second vehicle lamp 20 is mounted on the right front of the vehicle body 120, and the first vehicle lamp 10 and the second vehicle lamp 20 are symmetrically disposed. Therefore, the first vehicle lamp 10 may be similar to a left headlamp in function, the second vehicle lamp 20 may be similar to a right headlamp in function, and the first vehicle lamp 10 and the second vehicle lamp 20 have at least a low beam function and a high beam function, so that low beam illumination and high beam illumination can be implemented, and a driving safety requirement can be met.

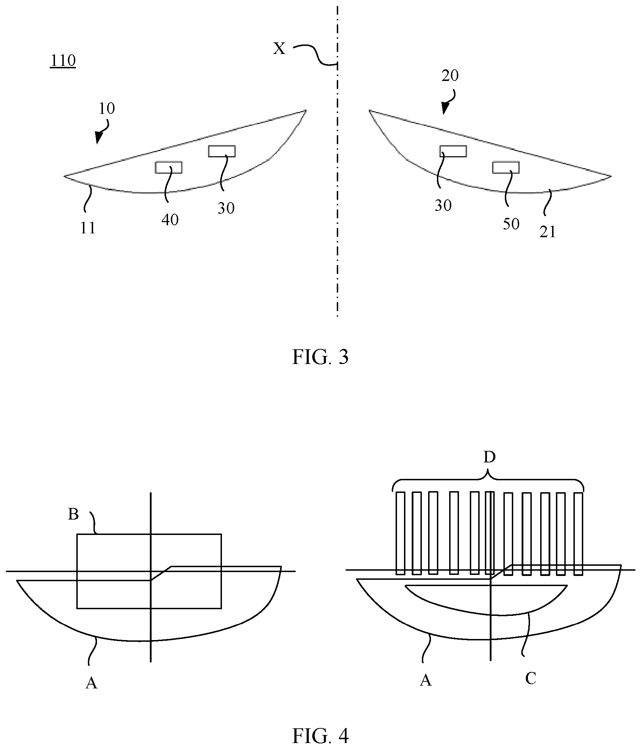

FIG. 3 is a diagram of an architecture of a first vehicle lamp apparatus according to an embodiment of this application. FIG. 4 is a diagram of light emitting of each module in the vehicle lamp apparatus in FIG. 3.

As shown in FIG. 3, the first vehicle lamp 10 includes an illumination module 30 and a projection module 40, and the second vehicle lamp 20 includes an illumination module 30 and a companion module 50. The illumination module 30 in the first vehicle lamp 10 and the illumination module 30 in the second vehicle lamp 20 are symmetrically disposed. The illumination module 30 is configured to emit a first illumination light beam (as shown by A in FIG. 4), to meet an illumination requirement. The projection module 40 and the companion module 50 are symmetrically disposed, so that layouts of internal modules of the first vehicle lamp 10 and the second vehicle lamp 20 are symmetrical, improving aesthetics of the vehicle 100. The projection module 40 is configured to emit an imaging light beam (as shown by B in FIG. 4) that forms an image. The image formed by the imaging light beam may be information such as a text, a picture, or video content, to meet a projection requirement. The companion module 50 is configured to emit a second illumination light beam.

That the projection apparatus and the companion module 50 are symmetrically disposed may be understood as that the projection apparatus and the companion module 50 are symmetrical in position with respect to a center line (as shown by X in FIG. 3) parallel to a length direction of the vehicle 100.

In a working process of the projection module 40, an imaging light beam emitted by the projection module 40 is emitted to the front of the vehicle 100, so that an image formed by the imaging light beam is projected to the ground and the air. An image projected to the front air mainly includes light intensity distribution information of a high beam, and an image projected to the ground may include any one or more of light intensity distribution information of a low beam and a user-defined pattern (for example, a pattern that has a prompt, a greeting, or an interaction function, like a zebra line, an arrow, a triangle, a manufacturer logo, or a text). It should be understood that, in addition to being projected to the ground, the imaging light beam emitted by the projection module 40 may be projected to another place like a wall.

In this embodiment of this application, the projection module 40 uses a pixelated imaging apparatus, which, for example, may be an imaging apparatus like an MEMS, a DMD, an LCOS, an LCD, or a MicroLED, so that the projection module 40 has high resolution, and can implement a projection function.

The companion module 50 may also use a pixelated light module. In this case, a pixel of the companion module 50 is lower than a pixel of the projection module 40, that is, resolution of the companion module 50 is lower than resolution of the projection module 40. For example, the projection module 40 may use a module of a megapixel level, and the companion module 50 may use a module of a thousand-pixel level or lower-pixel level.

In conclusion, the projection module 40 has high resolution, so that the projection module 40 has a high-definition feature, and can project an icon, a picture, video content, or the like, to implement intelligent interaction and intelligent projection. The companion module 50 has low resolution, may have features of a large field of view and high brightness, and may supplement an illumination radiation range and illumination brightness in an illumination scenario, or perform high beam illumination, to implement intelligent illumination. Therefore, the projection module 40 and the companion module 50 are symmetrically disposed, and are complementary in light type, so that performance of the vehicle lamp apparatus 110 meets illumination and projection performance requirements. In addition, there is one projection module 40, and a quantity of modules in the vehicle lamp apparatus 110 is reduced, thereby decreasing costs of the vehicle lamp apparatus 110.

As shown in FIG. 3, the first vehicle lamp 10 may further include a first housing 11, and the projection module 40 and one of the illumination modules 30 are disposed inside the first housing 11. The second vehicle lamp 20 may further include a second housing 21, and another illumination module 30 and the companion module 50 are disposed inside the second housing 21.

For example, the vehicle lamp apparatus 110 may include a first mode, a second mode, a third mode, a fourth mode, a fifth mode, a sixth mode, and a seventh mode. When the vehicle lamp apparatus 110 is in the first mode, the projection module 40 emits the imaging light beam. When the vehicle lamp apparatus 110 is in the second mode, the illumination module 30 emits the first illumination light beam. When the vehicle lamp apparatus 110 is in the third mode, the companion module 50 emits the second illumination light beam. When the vehicle lamp apparatus 110 is in the fourth mode, the projection module 40 emits the imaging light beam, and the illumination module 30 emits the first illumination light beam. When the vehicle lamp apparatus 110 is in the fifth mode, the illumination module 30 emits the first illumination light beam, and the companion module 50 emits the second illumination light beam. When the vehicle lamp apparatus 110 is in the sixth mode, the projection module 40 emits the imaging light beam, the illumination module 30 emits the first illumination light beam, and the companion module 50 emits the second illumination light beam. When the vehicle lamp apparatus 110 is in the seventh mode, the projection module 40 emits the imaging light beam, and the companion module 50 emits the second illumination light beam.

At least one of the projection module 40, the companion module 50, and the illumination module 30 in the vehicle lamp apparatus 110 is controlled to emit light, so that the vehicle lamp apparatus 110 has a plurality of working modes. The vehicle lamp apparatus 110 may implement, based on a minimum quantity of modules, three types of function scenarios of intelligent illumination, intelligent interaction, and intelligent projection. This can improve driving safety, and further can improve user experience. In addition, the vehicle lamp apparatus 110 has a small quantity of modules, so that costs of the vehicle lamp apparatus 110 can be reduced.

It may be understood that, at a same moment, one of the illumination module 30, the projection module 40, and the companion module 50 may emit light. Alternatively, two modules of the illumination module 30, the projection module 40, and the companion module 50 may emit light. Alternatively, the illumination module 30, the projection module 40, and the companion module 50 all may emit light.

It should be noted that a quantity of the working modes of the vehicle lamp apparatus may alternatively be some of the first mode to the seventh mode. Details are not described herein again.

For example, as shown in FIG. 2, the first vehicle lamp 10 is mounted on the left front of the vehicle body 120, and the second vehicle lamp 20 is mounted on the right front of the vehicle body 120. Therefore, the illumination module 30 in each of the first vehicle lamp 10 and the second vehicle lamp 20 may include a low beam mode. When the illumination module 30 is in the low beam mode, the illumination module 30 is similar to a low beam module in function. In this case, the first illumination light beam is used to implement low beam illumination, so that the first vehicle lamp 10 and the second vehicle lamp 20 have a low beam function, and can provide an illumination requirement in an environment with a poor field of view (for example, a night environment or a dim environment), to improve driving safety.

It should be noted that, in addition to the low beam mode, in some possible implementations, the illumination module 30 may further include a first high beam mode. When the illumination module 30 is in the first high beam mode, the illumination module 30 is similar to the high beam module 80 in function. In this case, the first illumination light beam is used to implement high beam illumination, and may provide long-distance illumination in an environment with a poor field of view (for example, a night environment or a dim environment), to increase a driving field of view.

In some embodiments, when the illumination module 30 is in the first high beam mode, the first illumination light beam may be used to implement adaptive drivingbeam illumination. Based on a position of and a distance to an oncoming vehicle, an illumination range of the illumination module 30 may be automatically adjusted, and a light illumination instruction in an area of the oncoming vehicle may be disabled or dimmed, to reduce glare from the oncoming vehicle, and meet a field of view requirement of a driver to a maximum extent. In some other embodiments, when the illumination module 30 is in the first high beam mode, the first illumination light beam may also be used to implement non-adaptive driving beam illumination, or it may be understood that the first illumination light beam is used to implement common high beam illumination.

It should be further noted that, in addition to being used as a low beam module or a high beam module 80, the illumination module 30 may also be used as another type of light module. For example, when the vehicle lamp apparatus 110 is mounted at the rear of the vehicle body 120, the first vehicle lamp 10 may alternatively be a left rear lamp, and the second vehicle lamp 20 may alternatively be a right rear lamp. In this case, the illumination module 30 may be similar to a brake lamp module in function. During braking, the illumination module 30 emits a first illumination light beam to indicate a rear vehicle to decelerate.

In some possible implementations, the companion module 50 may include a low beam auxiliary mode. When the companion module 50 is in the low beam auxiliary mode, the second illumination light beam is used to implement low beam auxiliary illumination (as shown by C in FIG. 4).

For example, when the vehicle lamp apparatus 110 is in the fifth mode, in a process in which the illumination module 30 performs low beam illumination, the second illumination light beam cooperates with the first illumination light beam, so that a range and/or brightness of low beam illumination can be improved, and low beam enhanced illumination can be implemented.

In some possible implementations, the companion module 50 may further include a second high beam mode. When the companion module 50 is in the second high beam mode, the companion module 50 is similar to a high beam module 80 in function. In this case, the second illumination light beam is used to implement high beam illumination, and may provide long-distance illumination in an environment with a poor field of view (for example, a night environment or a dim environment), to increase a driving field of view.

In some embodiments, when the companion module 50 is in the second high beam mode, the second illumination light beam may be used to implement adaptive driving beam illumination (as shown by D in FIG. 4). Based on a position of and a distance to an oncoming vehicle, an illumination range of the companion module 50 may be automatically adjusted, and a light illumination instruction in an area of the oncoming vehicle may be disabled or dimmed, to reduce glare from the oncoming vehicle, and meet a field of view requirement of a driver to a maximum extent. In some other embodiments, when the companion module 50 is in the second high beam mode, the second illumination light beam may also be used to implement non-adaptive driving beam illumination, or it may be understood that the first illumination light beam is used to implement common high beam illumination.

It should be noted that one of the illumination module 30 and the companion module 50 has a high beam mode, and the other does not have a high beam mode. For example, when the illumination module 30 has a first high beam mode, the companion module 50 does not have a second high beam mode. Alternatively, when the illumination mode 30 has a first high beam mode, the companion module 50 may have a second high beam mode. In this case, one of the first illumination light beam and the second illumination light beam is used to implement non-adaptive driving beam illumination, and the other is used to implement adaptive driving beam illumination.

In some possible implementations, the companion module 50 may further include a blind spot compensation mode, and when the companion module 50 is in the blind spot compensation mode, the second illumination light beam is used to implement blind spot illumination.

For example, when the vehicle lamp apparatus 110 is in the fifth mode, in a process in which the illumination module 30 performs low beam illumination, the second illumination light beam is used to irradiate a range that cannot be irradiated by the first illumination light beam. This can further increase a field of view of a driver, and help further improve driving safety.

In some possible implementations, the companion module 50 may further include a flicker mode, and when the companion module 50 is in the flicker mode, the companion module 50 emits the second illumination light beam at intervals a plurality of times in one period.

The companion module 50 emits light at intervals in one period, so that a light flicker effect can be achieved, and a light display requirement can be met. This helps improve aesthetics of the vehicle 100, and improve user experience. In addition, an independent optical module does not need to be disposed to meet a flicker requirement, so that a quantity of optical modules can be further reduced, and costs of the vehicle lamp apparatus 110 can be further reduced.

In some possible implementations, the companion module 50 may further include a high beam auxiliary mode. When the companion module 50 is in the high beam auxiliary mode, the second illumination light is used to implement high beam auxiliary illumination, and high beam enhanced illumination can be implemented. This further improves driving safety.

Specifically, in a process in which the illumination module 30 performs high beam illumination, the companion module 50 emits light, so that high beam enhanced illumination can be implemented.

In conclusion, in addition to the low beam auxiliary mode, the second high beam mode, the flicker mode, the high beam auxiliary mode, the blind spot compensation mode, and the like, the companion module 50 may further include another working mode. Details are not described herein again.

In addition, when the companion module 50 has a plurality of working modes, the companion module 50 may cooperate with the projection module 40 and/or the illumination module 30 by controlling the companion module 50 to be in different working modes, to implement different scenarios. For example, when the vehicle lamp apparatus 110 is in the third mode, the companion module 50 and the illumination module 30 cooperate with each other, to implement scenarios such as intelligent low beam and intelligent light compensation. It can be learned that the companion module 50 has a plurality of working modes, so that a quantity of optical modules in the vehicle lamp apparatus 110 can be reduced. This can reduce a size of the vehicle lamp apparatus 110, and can further reduce costs of the vehicle lamp apparatus 110.

In some possible implementations, in addition to implementing a projection function, the projection module 40 may also be configured to implement auxiliary illumination. In other words, the projection module 40 may alternatively include a projection mode and an illumination mode. When the projection module 40 is in the projection mode, the projection module 40 emits an imaging light beam and forms an image in front of the vehicle body 120. When the projection module 40 is in the illumination mode, the projection module 40 emits a third illumination light beam. The third illumination light beam is used to implement auxiliary illumination such as low beam auxiliary illumination, high beam auxiliary illumination, or blind spot illumination. This may further improve an illumination range or brightness, and may further improve an illumination effect of intelligent illumination.

It should be noted that, when the projection module 40 is in the illumination mode, the projection module 40 may emit light together with the companion module 50 and/or the illumination module 30, to implement different scenarios. For example, the projection module 40 and the companion module 50 simultaneously emit light, and the second illumination light beam and the third illumination light beam cooperate with each other to implement an adaptive illumination function.

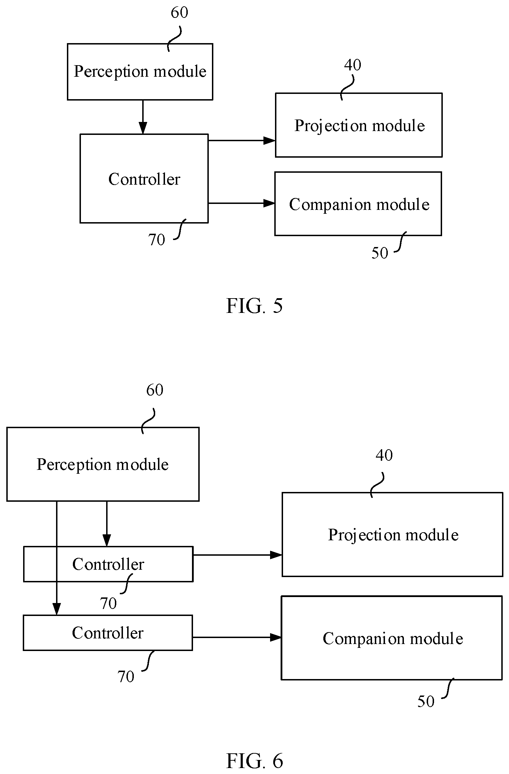

FIG. 5 is a diagram of a control architecture of the vehicle lamp apparatus according to an embodiment of this application. FIG. 6 is a diagram of another control architecture of the vehicle lamp apparatus according to an embodiment of this application.

In some possible implementations, the vehicle lamp apparatus 110 may further include a controller 70, and the controller 70 is electrically connected to the projection module 40 and the companion module 50 separately. The controller 70 is configured to control the projection module 40 to emit an imaging light beam, and/or the controller 70 is configured to control the companion module 50 to emit a second illumination light beam.

It should be noted that, in addition to that the controller 70 belongs to the vehicle lamp apparatus 110, in some embodiments, the vehicle 100 may also include the controller 70. In this case, the controller 70 and the vehicle lamp apparatus 110 are two independent modules.

In some embodiments, the controller 70 may be configured to control, based on perceptual Information output by a perception module 60, the projection module 40 to emit the imaging light beam, and/or the controller 70 may be configured to control, based on the perceptual Information output by the perception module 60, the companion module 50 to emit the second illumination light beam.

In this way, the controller 70 may control the projection module 40 and/or the companion module 50 to emit light based on the perceptual Information, so that advantages of the projection module 40 and the companion module 50 are complementary, and a function requirement of an intelligent vehicle lamp in a plurality of scenarios is met based on a minimum quantity of modules.

The perception module 60 may be an advanced driver assistance system (advanced driver assistance system, ADAS for short), a lidar, a microwave radar, a camera, or the like. The perceptual Information may be understood as target coordinate information that can be output by the perception module 60 based on an ambient environment of a vehicle.

For example, as shown in FIG. 5, there is one controller 70. A first end of the controller 70 is electrically connected to the perception module 60, a second end of the controller 70 is electrically connected to the projection module 40, a third end of the controller 70 is electrically connected to the companion module 50, and the projection module 40 and the companion module 50 share the same controller 70.

In some embodiments, the controller 70 may be disposed inside the first vehicle lamp 10. In some other embodiments, the controller 70 may alternatively be disposed inside the second vehicle lamp 20.

Certainly, in addition to that the projection module 40 and the companion module 50 share the same controller 70. In some embodiments, as shown in FIG. 6, the vehicle lamp apparatus 110 may alternatively include two controllers 70. A first end of one of the controllers 70 is electrically connected to a first end of the perception module 60, a second end of one of the controllers 70 is electrically connected to the projection module 40, and one of the controllers 70 is configured to control, based on the perceptual Information output by the perception module 60, the projection module 40 to emit the imaging light beam. A first end of the other controller 70 is electrically connected to a second end of the perception module 60, a second end of the other controller 70 is electrically connected to the companion module 50, and the other controller 70 is configured to control, based on the perceptual Information output by the perception module 60, the companion module 50 to emit the second illumination light beam. In this way, while controlling the projection module 40 and the companion module 50, it is possible to reduce performance requirements of the controller 70, thereby lowering costs of the controller 70, which in turn reduces costs of the vehicle lamp apparatus 110.

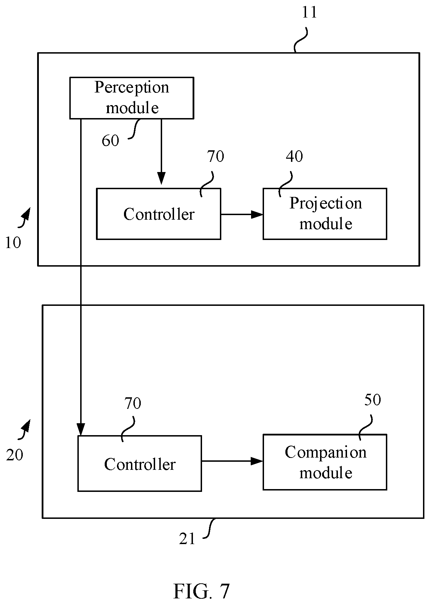

FIG. 7 is a diagram of an architecture of a second vehicle lamp apparatus according to an embodiment of this application.

In some embodiments, as shown in FIG. 7, one controller 70 may be disposed inside the first vehicle lamp 10, and the other controller 70 may be disposed inside the second vehicle lamp 20. In some other embodiments, two controllers 70 may be disposed inside the first vehicle lamp 10, or the two controllers 70 may be disposed inside the second vehicle lamp 20.

In some embodiments, the vehicle 100 includes a perception module 60. In this case, the perception module 60 and the vehicle lamp apparatus 110 are two mutually independent modules. In other words, the perception module 60 is disposed outside the vehicle lamp apparatus 110. However, in some other embodiments, the perception module 60 may alternatively be integrated into the vehicle lamp apparatus 110. Specifically, at least one of the first vehicle lamp 10 and the second vehicle lamp 20 may further include the perception module 60.

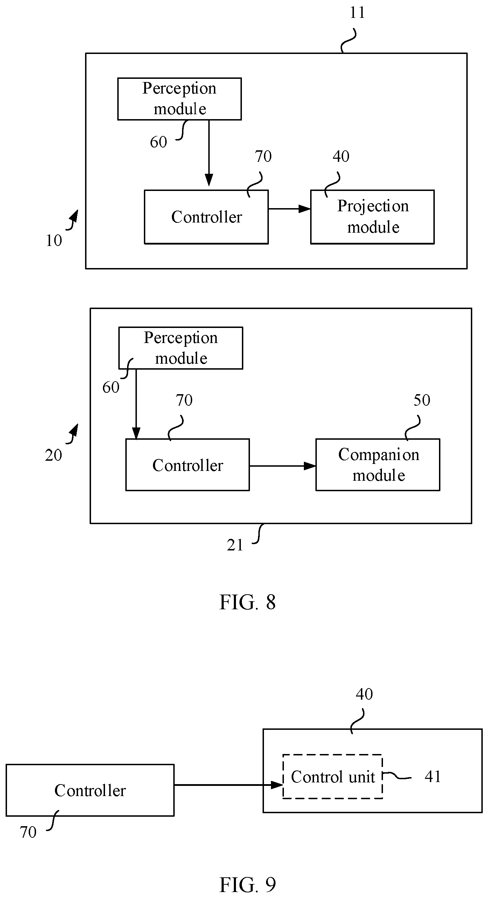

In some implementations, as shown in FIG. 7, the first vehicle lamp 10 may include the perception module 60. In some other implementations, the second vehicle lamp 20 may include the perception module 60. In some other implementations, as shown in FIG. 8, the first vehicle lamp 10 and the second vehicle lamp 20 each may include the perception module 60. FIG. 8 is a diagram of an architecture of a third vehicle lamp apparatus according to an embodiment of this application.

In the foregoing content, the projection module 40 does not have a control function, and the controller 70 controls the projection module 40 to emit an imaging light beam. However, the projection module 40 may alternatively have a control function.

FIG. 9 is a diagram of an architecture of another projection module according to an embodiment of this application.

A difference between FIG. 9 and FIG. 5 lies in that the projection module 40 may include a control unit 41, the control unit 41 is configured to be electrically connected to the controller 70, and the control unit 41 and the controller 70 are configured to control the projection module 40 to emit an imaging light beam. In other words, the control unit 41 has some control functions, and the controller 70 has some other control functions. In this way, the projection module 40 has some control functions, and an integration degree of the projection module 40 can be further improved.

In some embodiments, the control unit 41 and the controller 70 may control, based on the perceptual Information output by the perception module 60, the projection module 40 to emit a projection light beam. The perception module 60 may be electrically connected to the control unit 41 and the controller 70 separately, or the perception module 60 may be electrically connected to the control unit 41 or the controller 70.

In some other embodiments, the control unit 41 and the controller 70 may alternatively control, based on a control instruction output by an in-vehicle infotainment of the vehicle 100, the projection module 40 to emit an imaging light beam.

It should be noted that, in addition to that the controller 70 and the control unit 41 jointly control the projection module 40 to emit the imaging light beam, in some embodiments, the control unit 41 may alternatively be connected to the perception module 60 electrically, and the control unit 41 may alternatively be configured to control, based on the perceptual Information output by the perception module 60, the projection module 40 to emit the imaging light beam. In other words, the projection module 40 has a complete control function, and can control, based on the perceptual Information, the projection module 40 to emit light. In some other embodiments, the control unit 41 may alternatively control, based on a control instruction output by an in-vehicle infotainment of the vehicle 100, the projection module 40 to emit an imaging light beam.

In the foregoing content, high beam illumination may be performed through the illumination module 30 and/or the companion module 50, in other words, a high beam function is integrated into the illumination module 30 and/or the companion module 50. However, a high beam module 80 independent of the illumination module 30 and the companion module 50 may also be disposed in the vehicle lamp apparatus 110. In other words, the illumination module 30 and the companion module 50 do not have a high beam function.

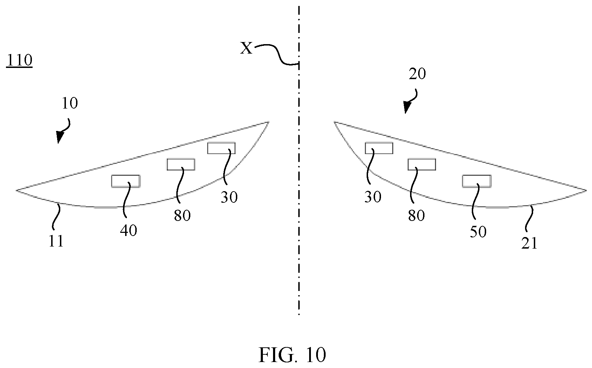

FIG. 10 is a diagram of an architecture of a fourth vehicle lamp apparatus according to an embodiment of this application.

A difference between FIG. 10 and FIG. 3 lies in that a quantity of working modes of the companion module 50 is different, and the first vehicle lamp 10 and the second vehicle lamp 20 each further include a high beam module 80. The high beam module 80 in the first vehicle lamp 10 and the high beam module 80 in the second vehicle lamp 20 are symmetrically disposed, and the high beam module 80 is configured to implement high beam illumination, and may provide long-distance illumination in an environment with a poor field of view (for example, a night environment or a dim environment), to increase a driving field of view.

In some embodiments, when the high beam module 80 may be configured to implement adaptive driving beam illumination, based on a position of and a distance to an oncoming vehicle, an illumination range of the high beam module 80 may be automatically adjusted, and a light illumination instruction in an area of the oncoming vehicle may be disabled or dimmed, to reduce glare from the oncoming vehicle and meet a field of view requirement of a driver to a maximum extent. In some other embodiments, the high beam module 80 may alternatively be configured to implement non-adaptive driving beam illumination, in other words, the high beam module 80 is configured to implement common high beam illumination.

In some embodiments, when the companion module 50 has a high beam auxiliary mode, in a process in which the high beam module 80 performs high beam illumination, the companion module 50 emits light, so that high beam enhanced illumination can be implemented. This helps further improve driving safety.

In the descriptions of embodiments of this application, it should be noted that, unless otherwise clearly specified and limited, the term "mounting", "connection to", or "connection" should be understood in a broad sense, for example, may be fastening, or may be an indirect connection through an intermediate medium, or may be an internal communication between two elements or an interaction relationship between two elements. A person of ordinary skill in the art may understand specific meanings of the foregoing terms in embodiments of this application based on specific cases.

In embodiments of this application, it is implied that an apparatus or element in question needs to have a particular orientation, or needs to be constructed and operated in a particular orientation, and therefore cannot be construed as a limitation on embodiments of this application. In the description of embodiments of this application, unless otherwise exactly and specifically ruled, "a plurality of" means two or more than two.

In the specification, claims, and accompanying drawings of embodiments of this application, the terms "first", "second", "third", "fourth", and so on (if existent) are intended to distinguish between similar objects but do not necessarily indicate a specific order or sequence. It may be understood that the data used in such a way is interchangeable in proper circumstances, so that embodiments of this application described herein can be implemented in other sequences than the sequence illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The term "a plurality of" in this specification refers to two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. A vehicle lamp apparatus, comprising a first vehicle lamp and a second vehicle lamp, wherein the first vehicle lamp and the second vehicle lamp are disposed on a same vehicle;
the first vehicle lamp comprises an illumination module and a projection module, and the second vehicle lamp comprises an illumination module and a companion module;
the illumination module in the first vehicle lamp and the illumination module in the second vehicle lamp are symmetrically disposed, and the illumination module is configured to emit a first illumination light beam; and
the projection module and the companion module are symmetrically disposed, the projection module is configured to emit an imaging light beam that forms an image, and the companion module is configured to emit a second illumination light beam.

2. The vehicle lamp apparatus according to claim 1, wherein the illumination module comprises a low beam mode, and when the illumination module is in the low beam mode, the first illumination light beam is used to implement low beam illumination.

3. The vehicle lamp apparatus according to claim 2, wherein the illumination module further comprises a first high beam mode, and when the illumination module is in the first high beam mode, the first illumination light beam is used to implement high beam illumination.

4. The vehicle lamp apparatus according to claim 3, wherein when the illumination module is in the first high beam mode, the first illumination light beam is used to implement adaptive driving beam illumination.

5. The vehicle lamp apparatus according to claim 1 or 2, wherein the first vehicle lamp and the second vehicle lamp each further comprise a high beam module, the high beam module in the first vehicle lamp and the high beam module in the second vehicle lamp are symmetrically disposed, and the high beam module is configured to implement high beam illumination.

6. The vehicle lamp apparatus according to claim 5, wherein the high beam module is configured to implement adaptive driving beam illumination.

7. The vehicle lamp apparatus according to claim 1 or 2, wherein the companion module further comprises a second high beam mode, and when the companion module is in the second high beam mode, the second illumination light beam is used to implement high beam illumination.

8. The vehicle lamp apparatus according to claim 7, wherein when the companion module is in the second high beam mode, the second illumination light beam is used to implement adaptive driving beam illumination.

9. The vehicle lamp apparatus according to any one of claims 1 to 4, wherein the companion module comprises a low beam auxiliary mode, and when the companion module is in the low beam auxiliary mode, the second illumination light beam is used to implement low beam auxiliary illumination.

10. The vehicle lamp apparatus according to any one of claims 1 to 4, wherein the companion module comprises a high beam auxiliary mode, and when the companion module is in the high beam auxiliary mode, the second illumination light beam is used to implement high beam auxiliary illumination.

11. The vehicle lamp apparatus according to any one of claims 1 to 4, wherein the companion module comprises a flicker mode, and when the companion module is in the flicker mode, the companion module emits the second illumination light beam at intervals a plurality of times in one period.

12. The vehicle lamp apparatus according to any one of claims 1 to 4, wherein the companion module comprises a blind spot compensation mode, and when the companion module is in the blind spot compensation mode, the second illumination light beam is used to implement blind spot illumination.

13. The vehicle lamp apparatus according to any one of claims 1 to 4, wherein the vehicle lamp apparatus further comprises a controller, and the controller is electrically connected to the projection module and the companion module separately; and
the controller is configured to control the projection module to emit the imaging light beam, and/or the controller is configured to control the companion module to emit the second illumination light beam.

14. The vehicle lamp apparatus according to any one of claims 1 to 4, wherein the vehicle lamp apparatus further comprises a controller, and the controller is electrically connected to the projection module and the companion module separately; and
the controller is configured to control, based on perceptual information output by a perception module, the projection module to emit the imaging light beam, and/or the controller is configured to control, based on the perceptual information output by the perception module, the companion module to emit the second illumination light beam.

15. The vehicle lamp apparatus according to claim 14, wherein at least one of the first vehicle lamp and the second vehicle lamp further comprises the perception module, and the perception module is electrically connected to the controller.

16. The vehicle lamp apparatus according to claim 14, wherein the vehicle lamp apparatus comprises two controllers, one of the controllers is configured to control, based on the perceptual information output by the perception module, the projection module to emit the imaging light beam, and the other controller is configured to control, based on the perceptual information output by the perception module, the companion module to emit the second illumination light beam.

17. The vehicle lamp apparatus according to any one of claims 1 to 4, wherein the projection module comprises a projection mode and an illumination mode;
when the projection module is in the projection mode, the projection module emits the imaging light beam; and
when the projection module is in the illumination mode, the projection module emits a third illumination light beam, wherein the third illumination light beam is used to implement auxiliary illumination.

18. The vehicle lamp apparatus according to any one of claims 1 to 4, wherein the vehicle lamp apparatus comprises a first mode, a second mode, a third mode, a fourth mode, a fifth mode, a sixth mode, and a seventh mode; and
when the vehicle lamp apparatus is in the first mode, the projection module emits the imaging light beam; when the vehicle lamp apparatus is in the second mode, the illumination module emits the first illumination light beam; when the vehicle lamp apparatus is in the third mode, the companion module emits the second illumination light beam; when the vehicle lamp apparatus is in the fourth mode, the projection module emits the imaging light beam, and the illumination module emits the first illumination light beam; when the vehicle lamp apparatus is in the fifth mode, the illumination module emits the first illumination light beam, and the companion module emits the second illumination light beam; when the vehicle lamp apparatus is in the sixth mode, the projection module emits the imaging light beam, the illumination module emits the first illumination light beam, and the companion module emits the second illumination light beam; and when the vehicle lamp apparatus is in the seventh mode, the projection module emits the imaging light beam, and the companion module emits the second illumination light beam.

19. A projection module, wherein the projection module is disposed in a first vehicle lamp, the first vehicle lamp further comprises an illumination module, the illumination module in the first vehicle lamp and an illumination module in a second vehicle lamp are symmetrically disposed, the illumination module is configured to emit a first illumination light beam, and the first vehicle lamp and the second vehicle lamp are disposed on a same vehicle; and
the second vehicle lamp comprises a companion module; and the projection module and the companion module are symmetrically disposed, the projection module is configured to emit an imaging light beam that forms an image, and the companion module is configured to emit a second illumination light beam.

20. The projection module according to claim 19, wherein the projection module comprises a projection mode and an illumination mode;
when the projection module is in the projection mode, the projection module emits the imaging light beam; and
when the projection module is in the illumination mode, the projection module emits a third illumination light beam, wherein the third illumination light beam is used to implement auxiliary illumination.

21. The projection module according to claim 19, wherein the projection module comprises a control unit, the control unit is configured to be electrically connected to a controller, and the control unit and the controller are configured to control the projection module to emit the imaging light beam.

22. The projection module according to claim 19, wherein the projection module comprises a control unit, and the control unit is configured to control, based on perceptual information, the projection module to emit the imaging light beam.

23. The projection module according to any one of claims 19 to 22, wherein the illumination module comprises a low beam mode, and when the illumination module is in the low beam mode, the first illumination light beam is used to implement low beam illumination.

24. The projection module according to any one of claims 19 to 22, wherein the illumination module further comprises a first high beam mode, and when the illumination module is in the first high beam mode, the first illumination light beam is used to implement high beam illumination.

25. The projection module according to any one of claims 19 to 22, wherein the companion module further comprises a second high beam mode, and when the companion module is in the second high beam mode, the second illumination light beam is used to implement high beam illumination.

26. The projection module according to any one of claims 19 to 22, wherein the companion module comprises a low beam auxiliary mode, and when the companion module is in the low beam auxiliary mode, the second illumination light beam is used to implement low beam auxiliary illumination.

27. The projection module according to any one of claims 19 to 22, wherein the companion module comprises a high beam auxiliary mode, and when the companion module is in the high beam auxiliary mode, the second illumination light beam is used to implement high beam auxiliary illumination.

28. A vehicle, comprising a vehicle body and the vehicle lamp apparatus according to any one of claims 1 to 18, wherein the vehicle lamp apparatus is mounted on the vehicle body.

29. The vehicle according to claim 28, wherein the vehicle lamp apparatus comprises a first vehicle lamp and a second vehicle lamp, the first vehicle lamp is mounted on the left front of the vehicle body, the second vehicle lamp is mounted on the right front of the vehicle body, and the first vehicle lamp and the second vehicle lamp are symmetrically disposed.
